# EUROPEAN PATENT APPLICATION

(11) **EP 2 214 432 A1**
(43) Date of publication of application: **04.08.2010**
(21) Application number: 09305078.9
(22) Date of filing: 29.01.2009
(51) Int. Cl.: H04W 16/10

(54) **A method for assignment of resources from a pool of resources from to cells or sectors of a communication network, a base station and a communcation network therefor**

(71) Applicant: Alcatel Lucent, 75008 Paris (FR)
(72) Inventor: Karla, Ingo, 46514, Schermbeck (DE)
(74) Representative: Kleinbub, Oliver

(57) **Abstract**

The invention concerns a method for assignment of resources from a pool of resources to cells (C1-C8) or sectors of a communication network (CN) comprising base stations (BS1-BS8), wherein at least one base station (BS1-BS8) selects if possible a resource for usage in the cell (C1-C8) or the sector assigned to said at least one base station (BS1-BS8) that is different from the resources of neighboring cells or sectors, and if said at least one base station (BS1-BS8) has no resource selected or has the same resource as in a neighboring cell or sector selected, said at least one base station determines a reassignment of resources for the cell or sector assigned to said at least one base station (BS1-BS8) and for the neighboring cells or sectors with the aim, that no adjacent cells or sectors have the same resources, a base station and a communication network therefor.

## Description

The invention relates to a method for assignment of resources from a pool of resources to cells or sectors of a communication network according to the preamble of claim 1, a base station according to the preamble of claim 14 and a communication network according to the preamble of claim 15.

Mobile cellular networks, like Third Generation Partnership Project Long Term Evolution (3GPP LTE), are required to provide a large degree of self-organizing, self-configuration and self-optimization functionalities. Such functionalities are e.g. the so-called self organizing network (SON) use cases defined by 3GPP LTE.

One of these self organizing network requirements applies to self-organizing inter-cell interference coordination (ICIC).

Orthogonal transmission schemes such as Orthogonal Frequency Division Multiplexing (OFDM), single carrier Frequency Division Multiple Access (FDMA) or distributed FDMA such as interleaved FDMA with multiple terminals will become increasingly important e.g. for future evolutions of air interfaces for mobile radio systems. Those radio systems are currently under discussion e.g. in Third Generation Partnership Project Long Term Evolution (LTE), for Wireless Local Area Networks (WLANs) e.g. according to standard IEEE 802.11a, or for a 4^{th} generation air interface.

Given the licensed bandwidth, transmission capacity from network providers e.g. for picture uploading or video communication has to be as high as possible for all users to serve as many subscribers as possible. Further the quality of service experienced by the user and especially the coverage of the service is an important property demanded by the user. So, an access scheme shall work well at the cell borders of a frequency reuse network. For that reason, interference coordination schemes are based on a distribution of resources across cells in a kind of network planning. This distribution of resources comprises the distribution of restrictions of the transmission power in the cells on restricted frequency subsets of the group of frequency subsets the frequency band is divided into.

In downlink, interference coordination works in such a way that the power restriction on frequency subsets in a cell leads to a preference for the usage of said frequency subsets by user terminals that are served by an adjacent cell.

In a multi-cell area the restrictions should be distributed in such a way, that in the region between two cells in a network with frequency reuse of about 1 whenever possible different restriction settings meet and in the whole border region as much as possible of the spectrum can be used and the data throughput is thus maximized.

So the goal of the distribution of restrictions is that neighboring cells or sectors have different restrictions and the corresponding possible preferences, as e.g. the preferably used subsets, for mobile terminals in the border region possibly leaving the cell are distributed across different parts of the border region.

This distribution of restrictions has to be reconsidered or revised if a new cell is added to an existing network, if an existing cell is removed, if the neighbor relations between the cells change, or if the interference situation changes in and/or around the area of these cells

In practice, networks have to be adapted to a real geography and limited availability of geographic locations where base stations can be placed. So the base station pattern will not be regular anymore. Thus a network planning for the restrictions or preferences has to be done for such real and irregularly positioned base stations. Further, if a new base station is added in an area where other base stations are already placed, the task is to distribute or redistribute the restrictions.

As stated above, a state-of-the-art approach for inter-cell interference coordination in communication networks using orthogonal transmission schemes is based on selectively reducing the power of certain frequency subsets in cells with a coordination between cells in the neighborhood. Similarly the so-called cell-pilot pattern does also need to be coordinated between neighboring cells.

In the patent EP 1784031 B1 a so-called gain matrix is introduced which is based on the interference relation between all cells or sectors. Based on the gain matrix, the overall data throughput can be maximized by choosing the optimum frequency subsets for power restriction in each cell or sector. However, said gain matrix is very large and thus implies a very high computational effort. Furthermore said gain matrix is obtained only by mobile measurements, which makes it problematic to obtain all matrix elements in time.

The resource distribution problem to be solved is related to the well known mathematical problem of coloring a graph in the field of graph theory. In the problem that is solved by the invention, a color corresponds to e.g. a certain frequency of a cell or a pilot frequency of a cell or a power restriction on a certain frequency subset, or generally speaking to a certain resource.

However, in the field of graph theory, only complete solutions are searched and only simple problem statement assumptions are used. The known mathematical coloring method does not handle the situations of real network scenarios, as e.g. interferences to more than only nearest neighbors, and to allow suboptimal color configurations in the case that no perfect free solution is possible.

There are well known mathematical algorithms for the pure mathematical coloring problem. Algorithms which find an optimal solution, as e.g. the so-called brute force and backtracking types, have all a computation effort which increases exponentially with the number of cells. Thus it cannot be applied for commercial networks, i.e. areas with a large number of cells. Simple cell by cell color assignment algorithms, i.e. the so-called greedy types, reach an arbitrary result of which its quality cannot be predicted.

The approach according to the prior art described above is based on the knowledge of certain information, i.e. the values of the cell properties, e.g. frequency patterns, and between which cells a coordination needs to take place. This approach can only be used in a centralized scenario, in which a global all knowing entity commands the cells which resources they have to use.

Such centralized approaches have the problem of being dependent on the centralized server, which can be vendor-specific, and do potentially not scale very well to a very large number of cells.

Furthermore, there may exist several large areas, which are coordinated by a central entity, like e.g. one central entity for a city. At the border between such areas, the self-coordination by centralized approaches does not work because the area at each side of the border is controlled and optimized by different entities.

The object of the invention is thus to propose a method for realizing inter-cell coordination tasks, like e.g. the above described inter-cell interference coordination, in a self organizing way and to improve the system performance with low computational effort and appropriate quality. Furthermore, the inter-cell coordination tasks shall be realized in a distributed, decentralized way without the need of a central entity for performing the inter-cell coordination.

This object is achieved by a method according to the teaching of claim 1, a base station according to the teaching of claim 14 and a communication network according to the teaching of claim 15.

The main idea of the invention can be summarized as following:

A base station in the communication network detects if a resource has already been assigned to itself, or if it has already been attempted to assign a resource to itself.

If no resource is assigned to the base station, or it has not yet been attempted to assign a resource to the base station, said base station determines if at least one resource can be selected for usage in a cell or a sector assigned to said base station so that the resources of neighboring cells or sectors in a defined area are different from said at least one resource.

Said base station selects if possible a resource for usage in the cell or the sector assigned to said base station, said resource being different from the resources of said neighboring cells or sectors.

Then, if said base station has no resource selected or has the same resource as in a neighboring cell or sector selected, said base station determines an assignment or a reassignment of resources for the cell or sector assigned to said base station and for the neighboring cells or sectors with the aim, that no adjacent cells or sectors have the same resources.

Further developments of the invention can be gathered from the dependent claims and the following description.

In the following the invention will be explained further making reference to the attached drawings.
Fig. 1 schematically shows a cellular communication network in which the invention can be implemented.
Fig. 2 schematically shows the partitioning of an OFDM or single carrier FDMA frequency band in disjunctive frequency subsets and the power limitation of a restricted frequency subset.
Fig. 3 schematically shows a hexagonal cell pattern with indication of dedicated frequency subsets that are used with restricted power in dedicated regions of the cells.
Fig. 4 schematically shows in a flow chart a method for assignment of resources to cells or sectors according to an embodiment of the invention.
Fig. 5 schematically shows the exchange of information related to a single base station between base stations according to an embodiment of the invention.
Fig. 6 schematically shows the exchange of information related to several base station between base stations according to an embodiment of the invention.
Fig. 7 schematically shows the exchange of information between distant base stations by cell ID collection and direct inter base station connection establishments according to an embodiment of the invention.
Fig. 8 schematically shows an irregular cellular network with an indication of the resources that have been assigned to the cells according to the invention.
Fig. 9 schematically shows a hexagonal cellular network with an indication of the resources that have been assigned and reassigned to the cells according to the invention.

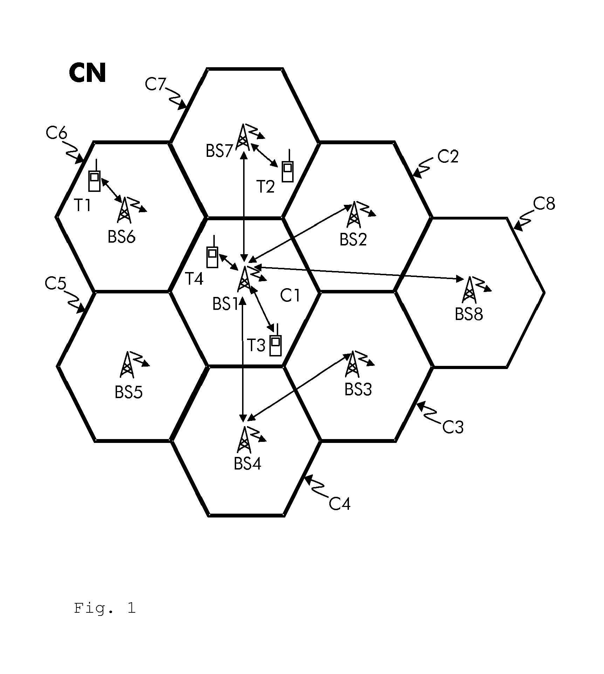

A communication network CN in which the invention can be implemented is depicted in fig. 1 and comprises user terminals T1-T4 and base stations BS1-BS8.

Each of said user terminals T1-T4 is connected to one or multiple of said base stations BS1-BS8, and each of said base stations is connected to at least one neighbor base station. The base stations are in turn connected to a core network which is not shown in fig. 1 for the sake of simplicity. The connections are exemplarily depicted by double arrows for some of the connections.

The user terminals T1-T4 comprise the functionality of a user terminal for transmission and reception in a communication network as e.g. an OFDM network, i.e. they can be connected to a communication network by means of a base station.

The base stations BS1-BS8 comprise the functionality of a base station of a communication network as e.g. a WLAN or an OFDM network, i.e. they serve the corresponding cells C1-C8, and provide the possibility for user terminals to get connected to the communication network.

Furthermore, a base station according to the invention comprises at least one processing means that is adapted
- to detect if a resource has already been assigned to the base station or if it has already been attempted to assign a resource to the base station,
- to determine if at least one resource can be selected for usage in a cell or a sector assigned to said base station so that the resources of neighboring cells or sectors in a defined area are different from said at least one resource,
- to select a resource for usage in the cell or the sector assigned to said at least one base station, said resource being different from the resources of said neighboring cells or sectors,
- and to determine an assignment or a reassignment of resources for the cell or sector assigned to said at least one base station and for the neighboring cells or sectors with the aim, that no adjacent cells or sectors have the same resources.

In the following, by way of example the method according to the invention is described in detail making reference to figs. 1 to 8.

In the following, the word "color" is used as a synonym for the word "resource" in order to stick to the terminology of the mathematical coloring problem used in 3GPP LTE inter-cell interference coordination. A certain color that is assigned to a cell means e.g. that a certain part of the frequency spectrum, i.e. one or more dedicated frequency subsets have a reduced power compared to the remaining part of the frequency spectrum in order to support inter-cell interference coordination (ICIC). Different cell-colors mark that different parts of the frequency bands, i.e. frequency subsets, are used with reduced power in the cells. While the above notation relates directly to 3GPP LTE inter-cell interference coordination, it can equally be used for other task of cell planning, e.g. that a color of a cell relates to the pilot patterns or in GSM (GSM = Global System for Mobile Communication) to the cell frequency. In order to cover all those cases, the algorithm described in the following uses the generic term "color" of a cell in order to cover all possible applications.

In the method according to the invention, a color is assigned to each cell or sector with the aim, that neighboring cells or sectors do not have the same color.

Neighboring cells or sectors are e.g. such cells or sectors which have a neighbor relation as listed in the 3GPP neighbor relation table (NRT). In particular, neighboring cells or sectors may also be such cells or sectors which are neighbors of a neighbor, i.e. neighbors of 2^{nd} order, or generally neighbors of nth order.

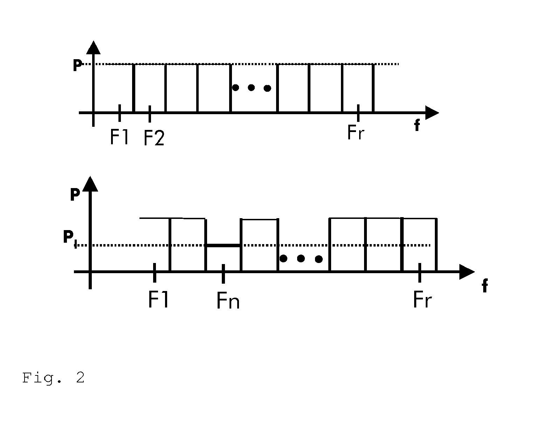

Fig. 2 shows in the upper part a number of r disjoint frequency subsets F1, F2 ... Fr along the frequency axis f. All these frequency subsets can have the same maximum power value along the power axis p, i.e. all frequency subsets are used with the same maximum power. These frequency subsets may contain frequency diverse frequency patterns to be robust against a frequency selective fading channel. For simplicity they are depicted as blocks over the frequency axis f as given in fig. 2.

In a general case the frequency subsets do not need to be disjoint albeit this makes the task more complex.

A cell or sector specific power planning is possible for the frequency subsets. For example, for the downlink depending on the dedicated cell a dedicated frequency subset can only be used with a reduced power, i.e. a resource restriction, in the cell.

This power restriction is illustrated in the lower part of fig. 2. Here, it can be seen that the restricted frequency subset Fn can only be used maximally with the limited power pl.

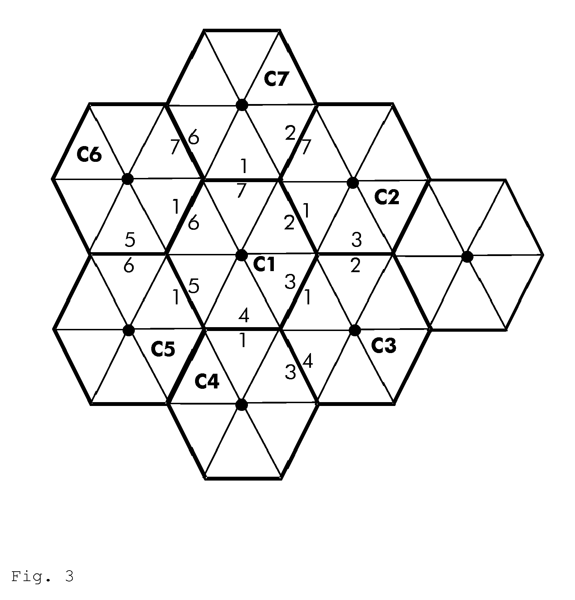

In fig. 3, interference power planning is illustrated for omni-directional antennas and hexagonal, sectorized cells for the case of r=7, i.e. 7 frequency subsets.

The hexagonal cells are denoted Cn, and the dot in the middle of each cell represents a base station. The number n indicates the power restricted frequency subset Fn of the respective cell Cn, and the frequency subsets Fk that are used in the border regions of the cells are denoted with numbers k. In the inner area of the cells, all frequency subsets are used for uplink. The respective power restricted frequency subset Fn is only used with limited power according to fig. 1 in downlink. In downlink e.g. interference coordination works in such a way that the power restriction of a frequency subset in a neighboring cell turns into a preference for the usage of said frequency subset for the user terminals served by the original cell and approaching the neighbor cell.

So the goal of the assignment of resources or resource restrictions is that neighboring cells have different resources or resource restrictions and the corresponding possible preferences for user terminals in the border region possibly leaving the cell are distributed across different parts of the border region so that as much as possible of the spectrum can be used in the whole border region and the data throughput is thus maximized.

By choosing e.g. r=7, it is achieved that a cell is surrounded by neighbors with a different cell number n, i.e. with a different power restricted frequency subset Fn.

The method according to the invention comprises two major steps to assign particular colors to cells or sectors:
1. Each cell or sector detects itself that no color has been assigned so far and that is has not yet been tried to assign a color. Then the cell or sector triggers itself, preferably after a random timer, the first color assignment step. For example, when a cell or sector is switched on, then no color has been assigned yet and then the cell or sector triggers itself, preferably after the random timer, to select a color for itself.
2. Each cell or sector analyzes itself during its operation whether the following resource condition occurs:
   a. no color has been assigned to the cell or sector, i.e. the first simple color assignment described above under 1. was not successful,
   b. and there is a neighboring cell or sector, which has the same color, i.e. there is a color conflict with the neighboring cell or sector.

Then each cell or sector, which has detected said resource condition, triggers itself, preferably after a random timer, an assignment or a reassignment of resources for some cells or sectors in an area around the cell or sector which has detected said resource condition and has triggered the assignment or the reassignment of resources. The assignment or the reassignment of resources is performed with the aim, that no adjacent cells or sectors have the same resources. In an embodiment of the invention, the resources of said cells or sectors in the area around the cell or sector which has detected said resource condition are determined with the aim, that direct neighbors of a cell or a sector have as many different colors, i.e. resources, assigned as possible. Thus, the resources in the cells or the sectors can be better exploited.

Both triggers in the two steps described above are generated by each individual cell or sector in a fully distributed way. There is no central commanding entity. Each cell or sector decides itself what it is doing when.

The random timer preferably used in the two steps results in only a small probability, that two cells or sectors near to each other trigger their method steps at the same time. However, if this should occur, then it does not matter for the coloring method according to the invention, as then it is possible that the two cells or sectors pick simultaneously by chance the same color, but this conflict will be resolved later in the subsequent second method step described above.

However, also a fixed timer or a timer calculated based on certain parameters can be used in the two steps. Said certain parameters are e.g. the strength of interference or the frequency that signals from other base stations are measured. The higher the interference is, or the higher the frequency of signals from other base stations is, the shorter the timer is in order to trigger the assignment or reassignment process more often.

In order to perform the method according to the invention for self organizing an assignment of colors, a knowledge of the following two information is needed in each cell or sector:
1. A knowledge of between which cells or sectors, within a defined area, a color coordination is necessary. This information can e.g. entirely be obtained and derived from the so-called neighbor relation tables. The direct neighbors are directly listed, and the second tier neighbors can be derived. Alternatively, information about neighboring cells or sectors can be sent in signalling messages to each cell or sector.
2. A knowledge of the colors of a certain set of cells or sectors in the surrounding of each cell or sector. This knowledge can be direct, i.e. which particular cell or sector has which color, or indirect, i.e. which colors are sensed by a particular cell or sector. Indirect knowledge could e.g. mean that a cell or sector reports which colors from neighboring cells or sectors are sensed without specifying in detail from which cell or sector said sensed colors originate.

In an embodiment of the invention, a base station (BS1-BS8) stores information about neighbor relations or resources which comprise entries in neighbor relation tables, information about resources assigned to the base station (BS1-BS8) or information about coupling strengths between base stations (BS1-BS8). Said information about coupling strengths comprise e.g. information about interference strength, information about the strength of a signal from another base station measured by the base station or information about how frequent a signal from another base station is measured by the base station.

Information about neighbor relations or resources are exchanged between base stations (BS1-BS8) using a specified message, a private message, an additional container attached to a protocol message, or an additional information element attached to a protocol message.

A base station (BS1-BS8) sends information about neighbor relations or resources when the neighbor relations or resources of the base station (BS1-BS8) have changed, or when the base station (BS1-BS8) has received a request from another cell or sector for sending said information about neighbor relations or resources.

The base stations (BS1-BS8) exchange the information about neighbor relations or resources using cascaded information exchange, exchange of lists comprising information from several cells or sectors, or direct connection establishment and information exchange between two cells or sectors.

In the following, a generic description of the required signalling functionality is given. The related information exchange is independent of a specific type of cellular network, i.e. it is e.g. well suited for 3GPP LTE, but it can also be applied in other cellular networks.

Below, only the functionality is outlined independent of a particular signalling message. It will be radio system dependent how such messages are actually designed. Especially all the messages related to the colors may be combined into, or attached to, a single protocol message, as e.g. one name + request/response, and the different functionalities, as e.g. information exchange or color change command, can be realized by different parameters, i.e. information elements, of the single protocol message.

The cells or sectors need to know the neighboring cells or sectors with which they need to coordinate their self organizing procedures. Preferably, all the information is already present in the base stations by means of the neighbor relation table (NRT), and no additional signalling information exchange is required.

The cells or sectors exchange information of its own color status. Said information may be included in a single small message, but it may also be combined with a next larger protocol message, which also contains said information. With said single simple message alone, the decentralized self organizing coloring method can already operate with considering the colors from two tiers cells or sectors, i.e. neighbors of neighbors, within its color optimization procedure. For even longer range color optimizations, the next larger message would be useful.

Optionally, the cells or sectors exchange messages comprising information about used or about free colors in its neighborhood. The messages support to find best suited colors for the cells or sectors, to consider longer range interferences, or to calculate a solution for a local area color reassignment which also includes cells or sectors located farther away.

The messages e.g. contain information whether a certain color would be possible or not, or how well a certain color would be suited, if e.g. long range interferences are considered. The messages could e.g. comprise the number of neighboring cells which already use a certain color, or also specific information which cell or sector, identified e.g. by a cell ID or a sector ID, has which color. For reporting said specific information, e.g. a list of all neighboring cell or sector IDs with the respective color is reported.

Said messages could be exchanged e.g. only when a change in color has occurred, or the information could be requested whenever a cell needs this information from another cell, or the messages could be exchanged periodically.

Possibly said messages also include an indication about the range over how many cells or sectors the information is allowed to spread, or a kind of lifetime counter, in order to inhibit the possibility that a change in one cell or sector is spread through the entire network. This range limitation or lifetime counter would only be required for very special variations of the method according to the invention.

The cells or sectors send messages towards a neighboring cell or sector to switch to a particular color. This message is sent to a neighboring cell or sector to suggest, or request, if possible, to switch its color to the proposed color. Optionally, the cell ID or sector ID of the cell or sector which shall change its color could also be transmitted, which facilitates to forward the color change suggestion to any cell or sector in a generic way.

The purpose of these message is to influence, i.e. suggest or command, the color assignment of another, i.e. a neighboring, cell or sector, after a cell or sector has performed a local area color optimization calculation and has found a better suited color for the other cell or sector. In other words, a base station selects a color for usage in the other cell or sector, i.e. the base station commands or suggests the usage of the color in the other cell or sector.

The messages described above can be exchanged by one or more of the following mechanism:
1. A cell or sector initiates a signalling message to inform automatically all of its neighbors, direct or farther neighbors, when its own situation is modified, e.g. if its color has changed.
2. When a cell or sector evaluates the resource condition, e.g. because a cell or sector has triggered itself to select a color for itself, then a request and response signalling mechanism is used to ask a neighboring cell or sector for their status, i.e. their colors. Optionally, the messages can be exchanged periodically.
3. The information to be transmitted can also simply be attached to other signalling messages, which are transmitted anyway, e.g. to periodic messages between the base stations.

It depends on the particular algorithm configuration parameters, which information precisely and in which form are exchanged.

In an embodiment of the invention, a base station sends a command or a suggestion to another base station that the other base station shall, forced or if possible or as a suggestion, now or soon perform a color determination for itself or for base stations in area around itself. Such a signalling message comprising said command or suggestion is useful when e.g. a base station did not completely succeed to reach an optimal color assignment in its area and then considers it as useful to let a particular other base station do a color assignment thereafter. This message can also be used to let the coloring process continue from one cell to another cell like in a crystallization process.

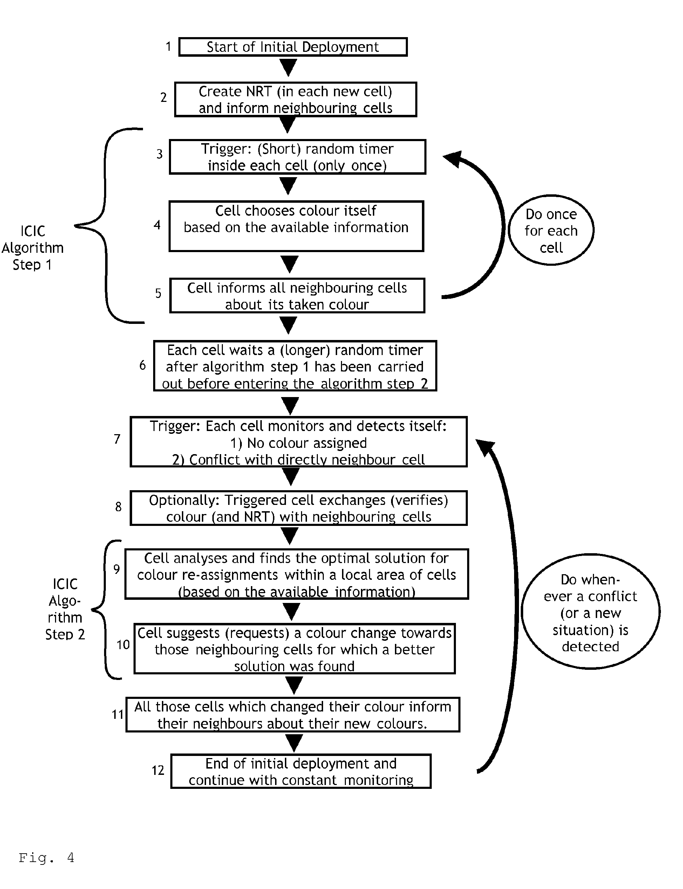

The flow chart in fig. 4 describes the steps of a method for assignment of resources to cells or sectors according to an embodiment of the invention.

In the flow chart in fig. 4, the different steps are indicated with numbers.

In the first step 1, the initial deployment is started, e.g. if a communication network is set up.

In the second step 2, neighbor relation tables comprising information about neighboring cells or sectors are created in each cell or sector. If e.g. a cell or sector is added to the communication network, a neighbor relation table is created for said new cell or sector, and the neighboring cells or sectors are informed about the new cell or sector.

In the third step 3, each cell or sector detects for itself whether no color has been assigned so far and whether it has not yet been tried to assign a color. Then the cell or sector triggers itself, preferably after a random timer, the first color assignment step. For example, when a cell or sector is switched on, then no color has been assigned yet and then the cell or sector triggers itself, preferably after the random timer, to choose a color for itself.

In the fourth step 4, each cell or sector chooses if possible a color for itself based on available information, as e.g. information about the neighbor cells or sectors and the colors of the neighbor cells or sectors, so that different colors are assigned for adjacent cells or sectors.

In the fifth step 5, the cells or sectors inform neighboring cells or sectors about its chosen colors.

In the sixth step 6, each cell or sector waits a random timer before switching to step 7.

In the seventh step 7, each cell or sector analyzes itself during its operation whether the following resource condition occurs:
a. no color has been assigned to the cell or sector, i.e. the first simple color assignment described above under step 4 was not successful,
b. and there is a neighboring cell or sector, which has the same color, i.e. there is a color conflict with the neighboring cell or sector.

If said resource condition occurs, a reassignment of resources as described in step 9 below is triggered.

Optionally, in the eighth step 8, cells or sectors that have been triggered in step 7 exchange or verify colors or neighbor relation tables with neighboring cells or sectors.

In the ninth step 9, each cell or sector, which has detected the resource condition of step 7, performs a reassignment of resources for some cells or sectors in an area around the cell or sector which has detected said resource condition and has triggered the reassignment of resources. The reassignment of resources is performed in such a way, that no adjacent cells or sectors have the same resources. The reassignment is performed based on the knowledge which are the neighboring cells or sectors, and on information about the colors of the neighboring cells or sectors.

In the tenth step 10, each cell or sector which has performed a reassignment of resources requests from, or suggests to neighboring cells or sectors a color change, if the reassignment has resulted in changing colors for said neighboring cells or sectors.

In the eleventh step 11, the cells or sectors which have changed their color inform their neighbor cells or sectors about their new colors.

In the twelfth step 12, the initial deployment is ended, and a constant monitoring in the communication network is started.

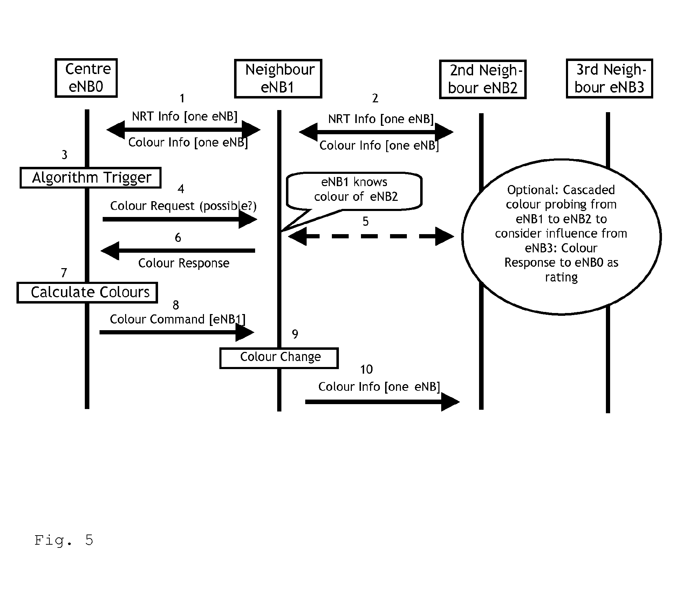

In fig. 5, the exchange of messages and information related to a single base station between base stations according to an embodiment of the invention is shown.

The embodiment in fig. 5 is related to an implementation of the invention in 3GPP LTE, and messages and information are exchanged between 4 base stations eNB0-eNB3, which are called enhanced NodeBs in 3GPP LTE.

In the first step 1, information related to their respective neighbor relation table and their respective color are exchanged between the base station eNB0 and the base station eNB1, and similarly in the second step 2, information related to their respective neighbor relation table and their respective color are exchanged between the base station eNB1 and the base station eNB2. The order of step 1 and step 2 can also be inverse, as the order of step 1 and step 2 has no influence on the method according to the invention.

In this embodiment, the information related to a respective neighbor relation table only comprises information about the neighbor relation of the sending base station. Thus, after the information exchange, each base station eNB0-eNB2 knows which are their direct neighbors and which color they use.

In the third step 3, the base station eNB0 triggers the detection that there is a neighboring base station eNB1 which has the same color, i.e. there is a color conflict with the neighboring cell.

In the fourth step 4, the base station eNB0 asks the base station eNB1 for the information, whether it would be possible that the base station eNB1 changes to a probed color in the case that said color change would later be commanded.

The base station eNB1 knows the color used by its neighbor base stations, as e.g. the base station eNB2. Thus, the base station eNB1 can check if it can change its color to at least one different color according to the request message without a neighbor base station, as e.g. base station eNB2, having the same color, i.e. without creating a color conflict.

Optionally, in the fifth step 5, the neighbor base station eNB1 requests from a neighbor base station, as e.g. base station eNB2, information about the color used by neighbor base stations of said neighbor base station, as e.g. base station eNB3. Thus in a response to the base station eNB0, the base station eNB1 can give a rating of the colors that are possible for usage in the base station eNB1 based on the usage of the colors in neighbor base stations that are farther away, as e.g. the base station eNB3. For example, if a lot of base stations that are farther away use the same color, a lot of interference is created, and said color has a low rating for usage in the base station eNB1 even if no color conflict is created.

In the sixth step 6, the neighbor base station eNB1 sends a response message to the base station eNB0, in which it is indicated which colors can be used by the base station eNB1 without creating a color conflict. Optionally, as described above, the response message comprises a rating of the colors which can be used by the base station eNB0 without creating a color conflict.

In the seventh step 7, the base station eNB0 selects a color from the colors comprised in the response message for usage optionally based on the rating of the colors as described above.

In the eighth step 8, the base station eNB0 sends a command message to the base station eNB1 by which a color change to the color selected by the base station eNB0 in the base station eNB1 is commanded.

In the ninth step 9, the base station eNB1 performs the color change to the color selected by the base station eNB0.

In the tenth step 10, the base station eNB1 informs their neighbor base stations about the new color.

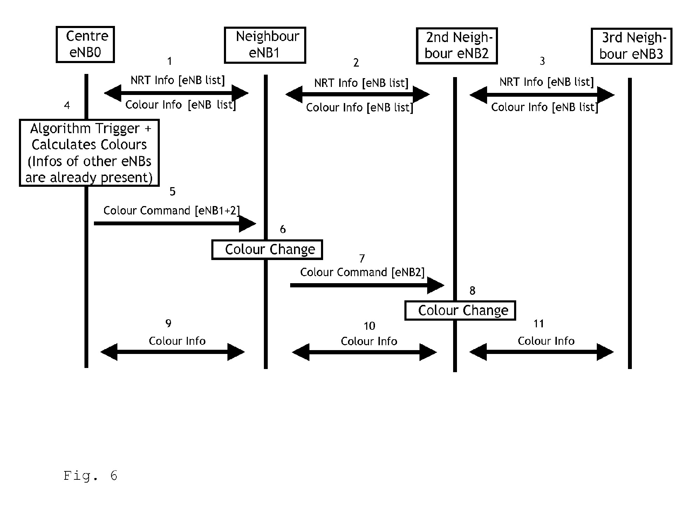

In fig. 6, the exchange of messages and information related to several base stations between base stations according to an embodiment of the invention is shown.

The embodiment in fig. 6 is related to an implementation of the invention in 3GPP LTE, and messages and information are exchanged between 4 base stations eNB0-eNB3, which are called enhanced NodeBs in 3GPP LTE.

In the first step 1, information about neighbor relations or used colors are exchanged between the base station eNB0 and the base station eNB1, and similarly in the second step 2 and the third step 3, information about neighbor relations or used colors are exchanged between the base station eNB1 and the base station eNB2, and between the base station eNB2 and the base station eNB3 respectively. The order of step 1, step 2 and step 3 can also be inverse as the order of step 1, step 2 and step 3 has no influence on the method according to the invention.

In this embodiment, information about neighbor relations or used colors comprises information about the neighbor relation of the sending base station and about the neighbor relation of at least one neighbor base stations of the sending base station. The information related to the used colors comprise information about the colors that are used by the sending base station and by said at least one neighbor base stations of the sending base station. Thus, after the information exchange, each base station eNB0-eNB3 knows which are their direct and farther neighbors and which color they use. The information about neighbor relations or used colors are exchanged by means of transmitting e.g. a list comprising neighbour relation tables and used colors of one or more base stations.

In the fourth step 4, the base station eNB0 triggers the detection that there is a neighboring base station eNB1 which has the same color, i.e. there is a color conflict with the neighboring cell. As the base station eNB0 has information about the direct and farther neighbors and about the colors they use, the base station eNB0 can determine a possible reassignment of resources, i.e. colors, of the direct and farther base stations in such a way, that no adjacent cells have the same resources. Command messages must be sent to all direct and farther base stations which must change their color according to the reassignment of resources.

In the fifth step 5, a command message in which it is indicated that the base stations eNB1 and eNB2 must change their color is sent from the base station eNB0 to the base station eNB1.

In the sixth step 6, the base station eNB1 changes its color according to the command message.

In the seventh step 7, a command message in which it is indicated that the base station eNB2 must change their color is sent from the base station eNB1 to the base station eNB2.

In the sixth step 6, the base station eNB2 changes its color according to the command message.

In the steps 9-11, the base stations eNB0-eNB3 exchange information related to their used colors.

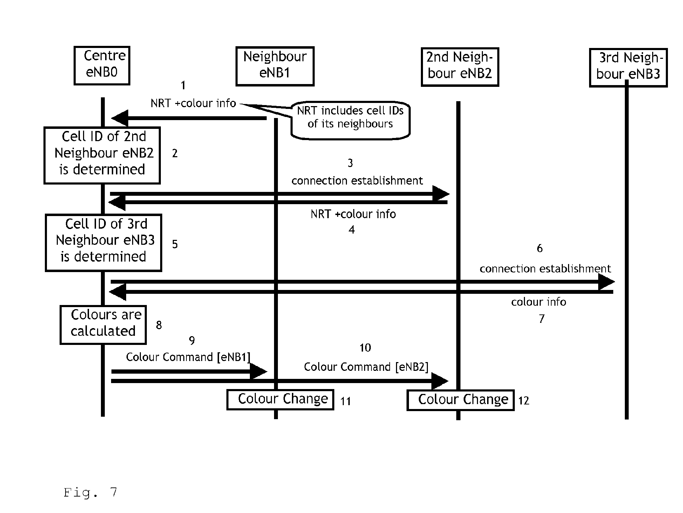

In fig. 7, the exchange of information between distant base stations by cell ID collection and direct inter base station connection establishments according to an embodiment of the invention is shown. A cell ID in the embodiment can be an arbitrary cell identifier as e.g. a globally unique cell ID or shorter ID to identify a cell.

The embodiment in fig. 7 is related to an implementation of the invention in 3GPP LTE, and messages and information are exchanged between 4 base stations eNB0-eNB3, which are called enhanced NodeBs in 3GPP LTE.

In the first step 1, information related to the neighbor relation table and the color are sent from the base station eNB1 to the base station eNB0. The direct neighbor base stations are already known to a base station by its own neighbor relation table. The neighbor relation table comprises cell IDs of the neighbors of base station eNB1. Said information are e.g. sent via a so-called X2 interface between the base station eNB0 and the base station eNB1.

In the second step 2, the base station eNB0 analyzes the received neighbor relation table from its direct neighbor base station eNB1, and determines the cell ID of the second tier neighbor base station eNB2. A second tier neighbor base station is a neighbor base station from a neighbor base station which is not listed in the neighbor relation table of base station eNB0.

In the third step 3, the base station eNB0 uses the knowledge of the cell ID of base station eNB2 to establish a direct connection to the second tier neighbor base station eNB2 e.g. via a X2 interface or via the core network.

In the fourth step 4, information related to the neighbor relation table and the color are sent from the base station eNB2 to the base station eNB0. The neighbor relation table comprises cell IDs of the neighbors of base station eNB2.

In the fifth step 5, the base station eNB0 analyzes the received neighbor relation table from its second tier neighbor base station eNB1, and determines the cell ID of the third tier neighbor base station eNB3. A third tier neighbor base station is a neighbor base station from a neighbor base station from a neighbor base station which is not listed in the neighbor relation table of base station eNB0.

In the sixth step 6, the base station eNB0 uses the knowledge of the cell ID of base station eNB3 to establish a direct connection to the third tier neighbor base station eNB3 e.g. via a X2 interface or via the core network.

In the seventh step 7, information related to the color are sent from the base station eNB3 to the base station eNB0.

Optionally, also information related to a neighbor relation table comprising cell IDs of the neighbors of base station eNB3 are sent from the base station eNB3 to the base station eNB0, so that even farther neighbors can be directly contacted by the base station eNB0. In principle, using this procedure, direct connections up to the nth tier neighbor base station can be established and their colors and neighbor relation tables can be obtained.

In the eighth step 8, the base station eNB0 determines based on the received information related to the colors used by the base stations eNB0, eNB1, eNB2 and eNB3 an assignment or a reassignment of colors for the base stations eNB0, eNB1 and eNB2 with the aim, that no adjacent cells have the same colors.

In the ninth step 9, the base station eNB0 sends a command message to the base station eNB1 by which a color change to the color selected by the base station eNB0 in the base station eNB1 is commanded.

In the tenth step 10, the base station eNB0 sends a command message to the base station eNB2 by which a color change to the color selected by the base station eNB0 in the base station eNB2 is commanded.In the eleventh step 11, the base station eNB1 performs the color change to the color selected by the base station eNB0.

In the twelfth step 12, the base station eNB2 performs the color change to the color selected by the base station eNB0.

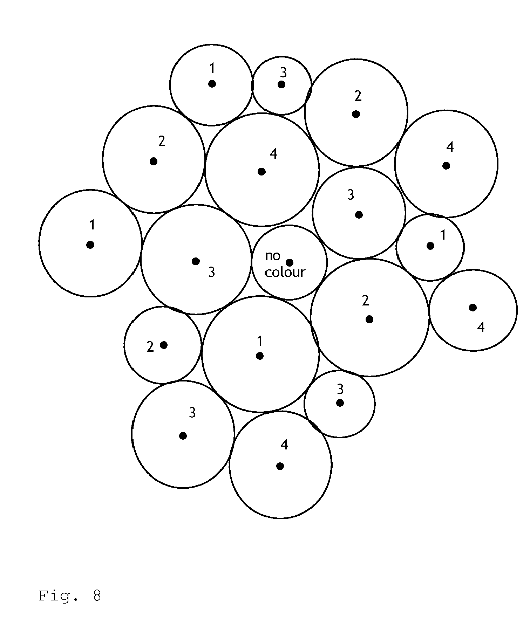

In fig. 8, as an example for the assignment of colors to cells, an irregular cellular network is depicted. The cells are indicated by circles and the base stations are indicated by dots. The color, i.e. the resource, that is assigned to the respective cell is indicated by a number. There are four different colors that can be assigned to the cells.

In the middle of the network, there is one cell to which no color could be assigned, as all four colors are already assigned to one of the neighbor cells. Either no color could have been assigned to the cell in the first major step of the method according to the invention as described above, or the cell has been newly added to the network.

The method according to the invention as described above can be used to try to solve the color conflict.

In the following, an example for solving a color conflict is described for the case of a hexagonal cellular network.

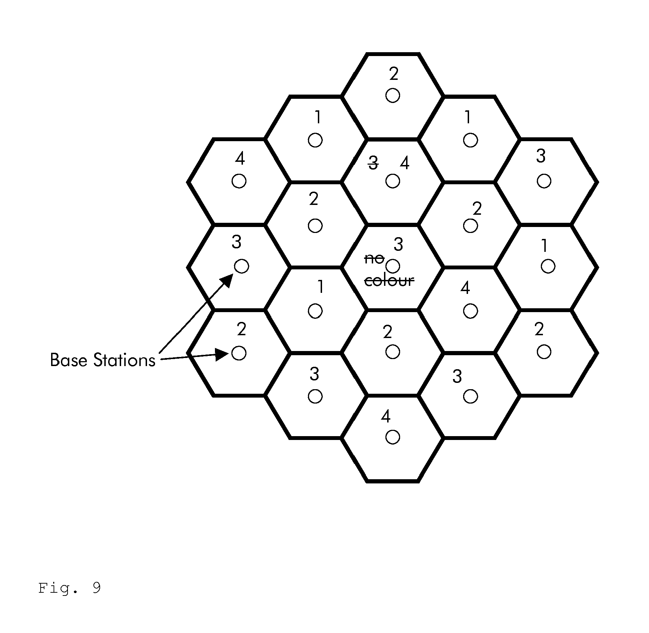

In fig. 9 as an example for the assignment of colors to cells, a local area of a hexagonal cellular network according to the invention is depicted. The cells are indicated by hexagons, and the base stations are indicated by circles. The color, i.e. the resource, that is assigned to the respective cell is indicated by a number. There are four different colors that can be assigned to the cells.

In the middle of the local area, there is one cell to which at the beginning no color could be assigned, as all four colors are already assigned to one of the neighbor cells.

At the beginning, to the cell in the middle of the local area, no color could have been assigned, which is indicated by the crossed-out words "no color", and to the cell right above said cell without a color, the color 3 has been assigned, which is indicated by a crossed-out 3.

After the color conflict has been detected by the cell in the middle of the local area, said cell sends a request message to its direct upper neighbor cell by which the upper neighbor cell is requested to change its color if this is possible.

The base station of the upper neighbor cell knows the color used by its neighbor base stations. Thus, said base station of the upper neighbor cell can check if it can change its color to at least one different color according to the request message without a neighbor base station having the same color, i.e. without creating a color conflict. The base station of the upper neighbor cell evaluates that it is possible to change its color to color 4 without creating a color conflict.

The base station of the upper neighbor cell sends a response message to the base station of the cell in the middle of the local area, in which it is indicated that color 4 can be used in the upper neighbor cell without creating a color conflict.

Then, the base station of the cell in the middle of the local area sends a command message to the base station of the upper neighbor cell by which a color change to the color 4 is commanded, and assigns to itself the color 3.

Finally, the base station of the upper neighbor cell performs the color change to the color 4, and informs its neighbor base stations about the new color.

## Claims

1. A method for assignment of resources from a pool of resources to cells (C1-C8) or sectors of a communication network (CN) comprising base stations (BS1-BS8), **characterized in, that**
• at least one base station (BS1-BS8) in the communication network (CN) detects if a resource has already been assigned to the at least one base station (BS1-BS8) or if it has already been attempted to assign a resource to the at least one base station (BS1-BS8),
• if no resource is assigned to the at least one base station (BS1-BS8), or it has not yet been attempted to assign a resource to the at least one base station (BS1-BS8), said at least one base station (BS1-BS8) determines if at least one resource can be selected for usage in a cell (C1-C8) or a sector assigned to said at least one base station (BS1-BS8) so that the resources of neighboring cells or sectors in a defined area are different from said at least one resource,
• said at least one base station (BS1-BS8) selects if possible a resource for usage in the cell (C1-C8) or the sector assigned to said at least one base station (BS1-BS8), said resource being different from the resources of said neighboring cells or sectors,
• and then if said at least one base station (BS1-BS8) has no resource selected or has the same resource as in a neighboring cell or sector selected, said at least one base station determines an assignment or a reassignment of resources for the cell or sector assigned to said at least one base station (BS1-BS8) and for the neighboring cells or sectors with the aim, that no adjacent cells or sectors have the same resources.

2. A method according to claim 1, **characterized in, that** said at least one base station (BS1-BS8) triggers itself after a timer has elapsed to determine if said at least one resource can be selected for usage in said cell (C1-C8) or said sector assigned to said at least one base station (BS1-BS8) so that the resources of said neighboring cells or sectors in the defined area are different from said at least one resource.

3. A method according to claim 1, **characterized in, that** said at least one base station (BS1-BS8) triggers itself or another base station after a timer has elapsed to determine the assignment or the reassignment of resources for the cell or sector assigned to said at least one base station (BS1-BS8) and for the neighboring cells or sectors with the aim, that no adjacent cells or sectors have the same resources.

4. A method according to claim 2 or 3, **characterized in, that** said timer is one of a group of an independent random timer, a fixed timer and a timer calculated based on certain parameters for each of said at least one base station (BS1-BS8).

5. A method according to claim 1, **characterized in, that** said communication network (CN) uses a frequency band that is divided into at least two frequency subsets (F1 F2...FR), and said resources differ in the used power level of said at least two frequency subsets (F1 F2...FR) .

6. A method according to claim 1, **characterized in, that** said communication network (CN) uses a frequency band that is divided into at least two frequency subsets (F1 F2...FR), and said resources correspond to pilot patterns.

7. A method according to claim 1, **characterized in, that** said at least one base station (BS1-BS8) determines said assignment or reassignment of resources for the cell or sector assigned to said at least one base station (BS1-BS8) and for the neighboring cells or sectors with the aim, that the number of changes of assignments of the resources is minimized.

8. A method according to claim 1, **characterized in, that** the base stations (BS1-BS8) store information about neighbor relations or resources which comprise at least one of the group of entries in neighbor relation tables, information about resources assigned to the base stations (BS1-BS8) and information about coupling strengths between the base stations (BS1-BS8) .

9. A method according to claim 8, **characterized in, that** the base stations (BS1-BS8) exchange information about neighbor relations or resources.

10. A method according to claim 9, **characterized in, that** information about neighbor relations or resources are exchanged using at least one of the group of a specified message, a private message, an additional container attached to a protocol message, and an additional information element attached to a protocol message..

11. A method according to claim 9, **characterized in, that** a base station (BS1-BS8) sends information about neighbor relations or resources when the neighbor relations or resources of the base station (BS1-BS8) have changed, or when the base station (BS1-BS8) has received a request from another cell or sector for sending said information about neighbor relations or resources.

12. A method according to claim 9, **characterized in, that** the base stations (BS1-BS8) exchange information about neighbor relations or resources using at least one of the group of cascaded information exchange, exchange of lists comprising information from several cells or sectors, and direct connection establishment and information exchange between two cells or sectors.

13. A method according to claim 1, **characterized in, that** said at least one base station (BS1-BS8) sends a message to at least one other cell or sector comprising a command or a suggestion to change the at least one resource.

14. A base station (BS1-BS8) for selection of resources from a pool of resources available in a communication network (CN) **characterized in, that** the base station (BS1-BS8) comprises at least one processing means that is adapted
• to detect if a resource has already been assigned to the base station (BS1-BS8) or if it has already been attempted to assign a resource to the base station (BS1-BS8),
• to determine if at least one resource can be selected for usage in a cell (C1-C8) or a sector assigned to said base station (BS1-BS8) so that the resources of neighboring cells or sectors in a defined area are different from said at least one resource,
• to select a resource for usage in the cell (C1-C8) or the sector assigned to said at least one base station (BS1-BS8), said resource being different from the resources of said neighboring cells or sectors,
• and to determine an assignment or a reassignment of resources for the cell or sector assigned to said at least one base station (BS1-BS8) and for the neighboring cells or sectors with the aim, that no adjacent cells or sectors have the same resources.

15. A communication network (CN) comprising at least one base station (BS1-BS8) for selection of resources from a pool of resources **characterized in, that** the at least one base station (BS1-BS8) comprises at least one processing means that is adapted
• to detect if a resource has already been assigned to the base station (BS1-BS8) or if it has already been attempted to assign a resource to the base station (BS1-BS8),
• to determine if at least one resource can be selected for usage in a cell (C1-C8) or a sector assigned to said base station (BS1-BS8) so that the resources of neighboring cells or sectors in a defined area are different from said at least one resource,
• to select a resource for usage in the cell (C1-C8) or the sector assigned to said at least one base station (BS1-BS8), said resource being different from the resources of said neighboring cells or sectors,
• and to determine an assignment or a reassignment of resources for the cell or sector assigned to said at least one base station (BS1-BS8) and for the neighboring cells or sectors with the aim, that no adjacent cells or sectors have the same resources.
